# EUROPÄISCHE PATENTANMELDUNG

(11) **EP 2 557 183 A1**
(43) Veröffentlichungstag der Anmeldung: **13.02.2013**
(21) Anmeldenummer: 11177403.0
(22) Anmeldetag: 12.08.2011
(51) Int. Cl.: C21D 8/04, C21D 11/00, G05B 17/02, H05B 6/10, C21D 9/56

(54) **Verfahren zum Betrieb einer Konti-Glühe für die Verarbeitung eines Walzguts**

(71) Anmelder: Siemens Aktiengesellschaft, 80333 München (DE)
(72) Erfinder: Rößiger, Martin, 91054 Erlangen (DE); Winter, Günther, 91077 Neunkirchen/Brand (DE)

(57) **Zusammenfassung**

Die Erfindung betrifft ein Verfahren zum Betrieb einer Konti-Glühe (2) für die Verarbeitung eines Walzguts (8), insbesondere eines metallischen Bands. Einem Modell (12) wird mindestens eine bandspezifische Eingangsgröße (E) bezogen auf einen Punkt oder einen Abschnitt des Walzguts (8) zugeführt. Im Hinblick auf eine präzise Regelung des Konti-Glühe-Prozesses wird mit Hilfe des Modells (12) mindestens eine Materialeigenschaft (ME) des Walzguts (8) nach dem Konti-Glühe-Prozess simuliert und mit einem vorgegebenen Sollwert (SW) vergleichen, und bei Abweichungen der simulierten Materialeigenschaft (ME) vom Sollwert (SW) wird mindestens eine Prozessgröße (T, V) des Konti-Glühe-Prozesses geregelt, während der Punkt oder der Abschnitts des Walzguts (8) sich noch in der Konti-Glühe (2) befindet.

## Beschreibung

Die Erfindung betrifft ein Verfahren zum Betrieb einer Konti-Glühe für die Verarbeitung eines Walzguts, insbesondere eines metallischen Bands. Die Erfindung betrifft weiterhin ein Computerprogramm, eine Steuereinrichtung für eine Konti-Glühe sowie eine Konti-Glühe.

Nach dem Warm- und Kaltwalzen eines metallischen Bands z.B. aus Stahl, wird das Band einer Wärmebehandlung unterzogen, um im Band gewünschte Werkstoffeigenschaften einzustellen. Industriell erfolgt die Wärmebehandlung z.B. in einer so genannten Konti-Glühe. In der Konti-Glühe wird das Band abgewickelt und durchläuft kontinuierlich einen Ofen.

Bei der Wärmebehandlung in der Konti-Glühe wird angestrebt bei einem möglichst großen Durchsatz die einzelnen Bänder mit möglichst gleichbleibender, hoher Qualität sowohl innerhalb eines Bands als auch von Band zu Band zu veredeln. Dafür werden für jede Stahlgüte die Prozessparameter beim Glühprozess entsprechend eingestellt. Diese sind vor allem die Bandgeschwindigkeit und der Temperaturverlauf beim Glühen, d.h. die Temperatur der einzelnen Aufheiz- und Abkühlabschnitte innerhalb der Konti-Glühe. Diese Prozessparameter werden in der Regel vom Ofenhersteller und/oder vom Betreiber vorgegeben und bleiben meist unverändert für eine Stahlgüte. Wenn eine neue Stahlgüte hinzukommt, so werden die Prozessparameter auf der Grundlage von Prozesserfahrungen und Experimenten neu bestimmt.

Der Erfindung liegt die Aufgabe zugrunde, eine präzise Regelung eines Glühprozesses zu ermöglichen.

Die Aufgabe wird erfindungsgemäß gelöst durch ein Verfahren zum Betrieb einer Konti-Glühe für die Verarbeitung eines Walzguts, insbesondere eines metallischen Bands, wobei mindestens eine Eingangsgröße bezogen auf einen Punkt oder einen Abschnitt des Walzguts einem Modell zugeführt wird, mit Hilfe des Modells mindestens eine Materialeigenschaft des Walzguts nach dem Konti-Glühe-Prozess simuliert und mit einem vorgegebenen Sollwert verglichen wird und bevor oder während der Punkt oder der Abschnitt des Walzguts sich in der Konti-Glühe befindet bei Abweichungen der simulierten Materialeigenschaft vom Sollwert mindestens eine Prozessgröße des Konti-Glühe-Prozesses geregelt wird.

Die Erfindung basiert auf der Idee, ein Modell zur Verfügung zu stellen, welches sich für eine modellprädiktive Regelung des Konti-Glühe-Prozesses eignet, so dass die Regelung auf Basis der simulierten Ergebnisse für die Materialeigenschaft erfolgt. Das Modell modelliert die Materialeigenschaften des Walzguts nach der Konti-Glühe. Das Modell enthält dabei insbesondere einen oder mehrere einstellbare Modellparameter. Solche Modellparameter sind z.B. eine Geschwindigkeit des Kornwachstums oder eine Geschwindigkeit der Phasenumwandlung des Metallbands.

Als Eingangsgrößen für das Modell dienen Eigenschaften des Walzguts, wie z.B. seine Legierungsanteile oder wenigstens die Stahlgruppe, seine Oberflächenrauhigkeit, seine Dicke und/oder seine Korngröße vor der Konti-Glühe.

Das Modell simuliert den Konti-Glühe-Prozess und dabei werden die Qualitätsparameter des Walzguts nach der Konti-Glühe vorhergesagt. Der Sollwert stellt dabei insbesondere eine Qualitätsnorm oder eine gewünschte Qualität dar. Der Sollwert kann hierbei auch ein Bereich und nicht nur ein absoluter Wert sein. Bei einem Vergleich der simulatorisch vorhergesagten Materialeigenschaften mit vorgegebenen Sollwerten für die vorliegende Stahlgüte kann sich unter Umständen eine Differenz ergeben, die es zu minimieren gilt. Dabei werden die Prozessparameter des Konti-Glühe-Prozesses, wie z.B. die Bandgeschwindigkeit im Ofen oder der Temperaturverlauf während der Wärmebehandlung entsprechend verändert. Es erfolgt somit eine kontinuierliche Regelung der Prozessparameter in Echtzeit, die zu einer gewünschten Qualität des Walzguts führt.

Bei der vorgeschlagenen modellprädiktiven Regelung wird also nicht auf die tatsächlichen Eigenschaften des Walzguts nach der Konti-Glühe geregelt, sondern es wird auf ein mit Hilfe des Modells vorhergesagtes Ergebnis für die Materialeigenschaften geregelt. Das Ergebnis für die Materialeigenschaften des Walzguts nach der Wärmebehandlung wird somit bereits berechnet, wenn ein Punkt oder Abschnitt des Walzguts, für den die Eingangsgrößen ermittelt sind, sich vor bzw. noch am Anfang des Konti-Glühe-Prozesses befindet. Damit ist eine optimale Steuerung bzw. Regelung der Prozessparameter während der Wärmebehandlung in der Konti-Glühe möglich, die zu einer genauen Kontrolle der nach der Wärmebehandlung einzustellenden Materialeigenschaften führt.

Ergänzend zur bandspezifischen Eingangsgröße wird vorteilhafterweise als Eingangsgröße auch eine Prozessgröße eines Vorprozesses oder der Konti-Glühe verwendet. Vorprozesse sind in diesem Fall z.B. ein Warmwalzen oder ein Kaltwalzen des Walzguts. Als Eingangsgröße kann dabei beispielsweise eine Haspeltemperatur verwendet werden oder die Walzkräfte in einer vorgeordneten Fertigstraße. Ebenfalls können die zu regelnden Prozessgrößen wie beispielsweise die Temperatur in der Konti-Glühe dem Modell als Eingangsgröße zugeführt werden. Die zu regelenden Prozessgrößen oder andere mit diesen korrelierten Größen werden dabei insbesondere gemessen.

Die mindestens eine Eingangsgröße kann gemessen werden oder aus Mess- oder Simulationsdaten der Vorprozesse extrahiert werden. Nach einer bevorzugten Variante wird die Eingangsgröße insbesondere unmittelbar vor der Konti-Glühe gemessen. Bevorzugt wird die Eingangsgröße durch eine Messung der magnetischen Remanenz oder der Oberflächenrauhigkeit des Walzguts ermittelt. Entsprechend ist vor der Konti-Glühe eine Vorrichtung zur Bestimmung der magnetischen Remanenz oder der Oberflächenrauhigkeit vorgesehen. Der Vorteil dieser Messungen ist, dass sie zerstörungsfrei sind und dass sie am laufenden Band durchgeführt werden können. Die magnetische Remanenz stellt den Restmagnetismus dar, den das zuvor magnetisierte Walzgut nach Entfernen des Magnetfeldes behält. Die magnetische Remanenz des Walzguts ist mit Materialeigenschaften des Walzguts korreliert, so dass über die magnetische Remanenz insbesondere eine Korn- oder Partikelgröße der Metallstruktur des Walzguts ermittelt wird, die als Eingangsgröße dem Modell zugeführt wird.

Alternativ oder ergänzend zur direkten oder indirekten Messung von Eigenschaften des Walzguts, die als Eingangsgrößen verwendet werden, wird die Eingangsgröße, unabhängig davon, ob sie eine band- oder prozessspezifische Größe ist, nach einer weiteren bevorzugten Variante aus Prozessdaten des Vorprozesses ermittelt. Beim Vorprozess, z.B. beim Kaltwalzen, werden unter Umständen ebenfalls Modelle zur Berechnung bestimmter Walzguteigenschaften bzw. zur Regelung von Prozessparametern angewendet. Aus den Prozessdaten dieser Modelle werden Informationen über die Eingangsgrößen für die modellprädiktive Regelung der Konti-Glühe gewonnen.

Sowohl bei den gemessenen als auch bei den berechneten Eingangsgrößen kann es vorkommen, dass diese nicht exakt bestimmt werden können, wobei jedoch ein Bereich ermittelt wird, in dem sie sich bewegen (z.B. nach Art einer Häufigkeitsverteilung). Wenn lediglich ein Bereich für die Eingangsgröße bestimmt wird, wird vorteilhafterweise die mindestens eine Prozessgröße ausgehend vom ungünstigsten Wert im Bereich geregelt. Die Regelung erfolgt dann derart, dass ein möglichst großer Bereich der möglichen Eingangsgrößen-Schwankungen abgedeckt ist, d.h. es wird insbesondere über den gesamten Bereich der Eingangsgröße modelliert, um den ungünstigsten Wert in diesem Bereich zu ermitteln, und schließlich wird mit diesem Wert geregelt. Beispielsweise wird als Eingangsgröße ein Perlit-Lamellenabstand verwendet. Es gilt, dass je geringer der Lamellenabstand, desto geringer die erforderliche Glühzeit zur Austentisierung des Stahles ist. Wenn der Lamellenabstand nicht exakt bestimmt werden kann, jedoch in einem Schwankungsbereich ermittelbar ist, gemäß der vorgeschlagenen modellprädiktiven Regelung wird dabei ausgehend vom ungünstigsten möglichen Perlit-Lamellenabstand innerhalb des Schwankungsbereichs die Glüh-Zeit zur Austentisierung vorhergesagt.

Gemäß einer bevorzugten Ausführung umfasst das Modell einen oder mehrere Modellparameter und die simulierte Materialeigenschaft nach dem Konti-Glühe-Prozess wird gemessen und bei einer Abweichung der simulierten Materialeigenschaft von der gemessenen Materialeigenschaft wird mindestens ein Modellparameter angepasst. Wird z.B. nach der Konti-Glühe eine kleinere Korngröße als simuliert ermittelt, so kann im Modell die Geschwindigkeit des Kornwachstums entsprechend verringert werden.

Zweckdienlicherweise wird mit Hilfe des rechnerischen Modells als Materialeigenschaft eine Oberflächenrauhigkeit, eine Streckgrenze und/oder eine Zugfestigkeit des Walzguts berechnet. Für diese Materialeigenschaften gibt es in der Regel festgelegte Qualitätsnormen, welche bei der Simulation als Sollwert herangezogen werden.

Bevorzugt ist die Materialeigenschaft mit einer Zwischengröße korreliert und mit Hilfe des Modells wird zunächst die Zwischengröße berechnet. Es erfolgt somit eine indirekte Berechnung der Materialeigenschaft. Beispielsweise ist die Zwischengröße die Korngröße des Walzguts nach dem Konti-Glühe-Prozess. Diese Korngröße wird im Modell simuliert und auf Basis der Korngröße werden die gewünschten Materialeigenschaften, wie z.B. Streckgrenze oder Zugfestigkeit, bestimmt.

Die Aufgabe wird weiterhin erfindungsgemäß gelöst durch ein Computerprogramm, das einen Maschinencode umfasst, der von einer Steuereinrichtung für ein Walzwerk unmittelbar abarbeitbar ist und dessen Abarbeitung durch die Steuereinrichtung bewirkt, dass die Steuereinrichtung ein Verfahren nach einer der obigen Ausführungen ausführt. Das Computerprogramm ist bevorzugt auf einem Datenträger in maschinenlesbarer Form gespeichert.

Die Aufgabe wird zudem erfindungsgemäß gelöst durch eine Steuereinrichtung die derart ausgebildet ist, dass sie im Betrieb ein Verfahren nach den oben genannten Ausführungen ausführt.

Schließlich ist die Aufgabe durch eine Konti-Glühe gelöst, die von einer derartigen Steuereinrichtung gesteuert wird.

Die im Zusammenhang mit dem Verfahren angeführten Vorteile und bevorzugten Ausführungen lassen sich sinngemäß auf das Computerprogramm, die Steuereinrichtung und die Konti-Glühe übertragen.

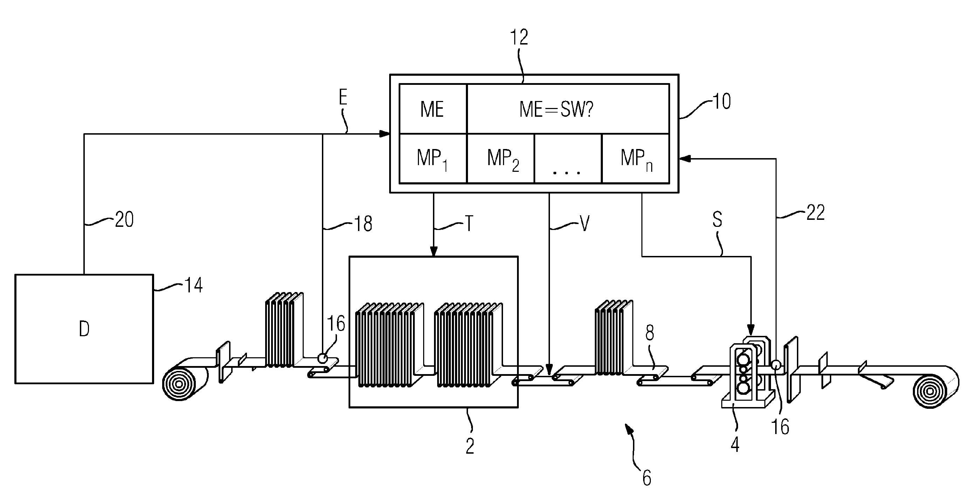

Ein Ausführungsbeispiel der Erfindung wird anhand einer Zeichnung näher erläutert. Hierin zeigt die einzige Figur schematisch und stark vereinfacht ein Verfahren zum Betrieb einer Konti-Glühe 2, die zusammen mit einem Dressiergerüst 4 Teil einer Behandlungslinie 6 ist. In der Behandlungslinie 6 wird ein Walzgut, hier ein Band 8 aus Stahl, einer Wärmebehandlung unterzogen. Die Regelung der Konti-Glühe 2 sowie des Dressiergerüsts 4 erfolgt dabei mit Hilfe einer Steuereinrichtung 10, welche ein Modell 12 umfasst.

Beim Einlaufen eines bestimmten Punktes oder Abschnitts des Bands 8 in die Konti-Glühe 2 werden Eingangsgrößen E bezogen auf diesen Punkt oder Abschnitt des Bands dem Modell 12 zugeführt. Die Eingangsgröße E ist insbesondere eine Materialeigenschaft des Bandes wie z.B. chemische Zusammensetzung, die Oberflächenrauhigkeit oder die Korngröße des Bands 8. Als Minimalerfordernis soll zumindest die Stahlgüte des Bands 8 die Eingangsgröße E bilden.

Im gezeigten Ausführungsbeispiel wird als Eingangsgröße E die Zugfestigkeit und/oder Streckgrenze des Bands 8 verwendet, die indirekt über die magnetische Remanenz des Bands 8 bestimmt wird. Die magnetische Remanenz wird mit Hilfe der Messvorrichtung 16, wie unmittelbar vor der Konti-Glühe 2 angeordnet ist, gemessen. Ein Messsignal 18 wird der Steuereinrichtung 10 zugefügt und das Messsignal 18 wird in der Steuereinrichtung 10 bearbeitet, so dass die gewünschte Eingangsgröße E ermittelt wird. Direkt und zerstörungsfrei kann als Eingangsgröße E auch die Oberflächenrauhigkeit des Bands 8 gemessen werden.

Die Korngröße des Bands 8 sowie weitere Eingangsgrößen, wie z.B. ein Perlit-Lamellenabstand, können ebenfalls aus Prozessdaten eines Vorprozesses 14 gewonnen werden, was in der Figur durch einen Pfeil 20 angedeutet ist. Aus dem Vorprozess 14 können für das Modell 12 nicht nur bandspezifische Daten herangezogen werden, sondern ebenfalls prozessspezifische Daten wie z.B. die Walzkräfte eines vorgeordneten Walzgerüsts bzw. die einzelnen Banddicken in den verschiedenen Stadien der Bandbearbeitung. Der Vorprozess ist im gezeigten Ausführungsbeispiel ein Kaltwalz-Prozess. Beim Kaltwalzen können ebenfalls Modelle zum Simulieren des Prozesses verwendet werden, welche Daten D erhalten, die unmittelbar oder mittelbar als Eingangsgrößen E für das Modell 12 verwendet werden können.

Ergänzend zu den bandspezifischen Eingangsgrößen E können auch prozessspezifischen Größen der Konti-Glühe 2 wie beispielsweise eine Temperatur eines Inertgases im Ofen der Konti-Glühe 2 weitere Eingangsgrößen für das Modell 12 bilden.

Im gezeigten Ausführungsbeispiel werden die Eingangsgrößen E sowohl durch Messungen als auch durch die Prozessdaten D aus dem Vorprozess 14 gewonnen. Denkbar ist jedoch auch, die Eingangsgrößen E nur durch eine dieser beiden Vorgehensweisen zu bestimmen.

Auf Basis der Eingangsgrößen E wird im Modell 12 eine Materialeigenschaft ME des Bands 8 nach der Konti-Glühe 2 simuliert. Die Materialeigenschaft ME ist z.B. eine Streckgrenze oder eine Zugfestigkeit des Bands 8 nach dem Dressiergerüst 4. Die Materialeigenschaft ME nach dem Glühen wird somit noch zu Beginn oder während der Wärmebehandlung in der Konti-Glühe 2 vorhergesagt. Die simulierte Materialeigenschaft ME wird mit einem vorgegeben Sollwert SW verglichen, um zu überprüfen, ob die Materialeigenschaft ME den Qualitätserfordernissen genügt. Sollte die simulierte Materialeigenschaft ME vom Sollwert SW abweichen, wird mindestens eine Prozessgröße der Behandlungslinie 6 bzw. der Konti-Glühe 2 gesteuert oder geregelt. Solche Prozessgrößen sind z.B. die Bandgeschwindigkeit V in der Konti-Glühe 2 oder in den restlichen Bereichen der Behandlungslinie 6 sowie der Temperaturverlauf T in der Konti-Glühe 2, wobei unter Temperaturverlauf T sowohl der räumliche als auch der zeitliche Temperaturverlauf zu verstehen ist. Durch ein Steuersignal S wird in der Figur eine Änderung von Prozessparametern des Dressiergerüsts 4 veranschaulicht.

Wenn eine Eingangsgröße E nicht genau bestimmt werden kann, sondern lediglich ein Bereich bekannt ist, in dem die Eingangsgröße E liegt, wird die Simulation mit Hilfe des Modells 12 insbesondere für alle und wenigstens für beide Grenzen des Bereichs durchgeführt. Für die Wärmebehandlung in der Konti-Glühe 2 wird dabei die Simulation mit dem ungünstigsten Wert des Bereichs für die Eingangsgröße E herangezogen und entsprechend wird mindestens ein Prozessparameter T, V, S, eingestellt.

Das Modell 12 umfasst eine Reihe von Modellparameter MP₁, MP₂, ..., MPₙ auf deren Basis die Simulation der Materialeigenschaft ME nach der Wärmebehandlung durchgeführt wird. Modellparameter MP sind z.B. die Geschwindigkeit des Kornwachstums während der Wärmebehandlung oder ein Korrekturfaktor für die Geschwindigkeit der Phasenumwandlung.

Die Modellparameter MP sind im gezeigten Ausführungsbeispiel einstellbar und werden in Abhängigkeit von einer tatsächlichen, gemessenen Materialeigenschaft angepasst. Beispielsweise ist unmittelbar nach dem Dressiergerüst 4 ebenfalls eine Messvorrichtung 16 zur Bestimmung der magnetischen Remanenz vorgesehen. Ein Messsignal 20 wird der Steuereinrichtung 10 zugeführt. Auf Basis des Messsignals 20 wird in der Steuereinrichtung 10 die tatsächliche Streckgrenze und/oder Zugfestigkeit des Bands 8 im Bereich des Dressiergerüsts 4 indirekt bestimmt. Die somit indirekt gemessene Streckgrenze wird mit der Streckgrenze verglichen, die simuliert wurde, als dieser Bandabschnitt sich am Anfang der Konti-Glühe befand. Bei Abweichungen der simulierten Streckgrenze von der gemessenen Streckgrenze werden ein oder mehrere Modellparameter MP angepasst, um die Präzision bei der modellprädiktiven Regelung der Wärmebehandlung des Stahlbands 8 zu erhöhen.

Dank der oben beschriebenen modellprädiktiven Regelung der Konti-Glühe 2 erfolgt eine kontinuierliche Echtzeitanpassung der aktuellen Prozessparameter T, V, S an die bandspezifischen Eingangsparameter E wodurch eine genauere Kontrolle der Materialeigenschaften (z.B. Streckgrenze, Zugfestigkeit) sowohl innerhalb des Bands als auch von Band zu Band erreicht wird. Alternativ oder ergänzend zur Regelung auf Qualitätsparameter kann mittels des Modells der Durchsatz durch die Behandlungslinie 6 gesteigert und damit der Energieverbrauch gesenkt werden.

## Patentansprüche

1. Verfahren zum Betrieb einer Konti-Glühe (2) für die Verarbeitung eines Walzguts (8), insbesondere eines metallischen Bands, wobei mindestens eine bandspezifische Eingangsgröße (E) bezogen auf einen Punkt oder einen Abschnitt des Walzguts (8) einem Modell (12) zugeführt wird, mit Hilfe des Modells (12) mindestens eine Materialeigenschaft (ME) des Walzguts (8) nach dem Konti-Glühe-Prozess simuliert und mit einem vorgegebenen Sollwert (SW) vergleichen wird, und bei Abweichungen der simulierten Materialeigenschaft (ME) vom Sollwert (SW) bevor oder während der Punkt oder der Abschnitt des Walzguts (8) sich in der Konti-Glühe (2) befindet mindestens eine Prozessgröße (T, V) des Konti-Glühe-Prozesses geregelt wird.

2. Verfahren nach Anspruch 1,
wobei als Eingangsgröße (E) auch eine Prozessgröße (T, V) eines Vorprozess (14) oder der Konti-Glühe verwendet wird.

3. Verfahren nach Anspruch 1 oder 2,
wobei die Eingangsgröße (E) vor der Konti-Glühe (2) gemessen wird.

4. Verfahren nach Anspruch 3,
wobei die Eingangsgröße (E) durch eine Messung der magnetischen Remanenz des Walzguts (8) ermittelt wird.

5. Verfahren nach einem der vorhergehenden Ansprüche, wobei die Eingangsgröße (E) aus Prozessdaten (D) des Vorprozesses (14) ermittelt wird.

6. Verfahren nach einem der vorhergehenden Ansprüche, wobei lediglich ein Bereich für die Eingangsgröße (E) bestimmt wird und die mindestens eine Prozessgröße (T, V) ausgehend vom ungünstigsten Wert im Bereich geregelt wird.

7. Verfahren nach einem der vorhergehenden Ansprüche, wobei das Modell (10) ein oder mehrere Modellparameter (MP) umfasst und wobei die simulierte Materialeigenschaft (ME) nach dem Konti-Glühe-Prozess gemessen wird und bei einer Abweichung der simulierten Materialeigenschaft (ME) von der gemessenen Materialeigenschaft mindestens ein Modellparameter (MP) angepasst wird.

8. Verfahren nach einem der vorhergehenden Ansprüche, wobei als Materialeigenschaft (ME) eine Oberflächenrauhigkeit, eine Streckgrenze und/oder eine Zugfestigkeit des Walzguts (8) berechnet werden.

9. Verfahren nach einem der vorhergehenden Ansprüche, wobei die Materialeigenschaft (ME) mit einer Zwischengröße korreliert ist und die Zwischengröße mittels des Modells (10) berechnet wird.

10. Computerprogramm, das einen Maschinencode umfasst, der von einer Steuereinrichtung (10) für eine Konti-Glühe (2) unmittelbar abarbeitbar ist und dessen Abarbeitung durch die Steuereinrichtung (10) bewirkt, dass die Steuereinrichtung (10) ein Verfahren nach einem der vorhergehenden Ansprüche ausführt.

11. Computerprogramm nach Anspruch 10,
das auf einem Datenträger in maschinenlesbarer Form gespeichert ist.

12. Steuereinrichtung (10) für eine Konti-Glühe (2),
wobei die Steuereinrichtung (10) derart ausgebildet ist, dass sie im Betrieb ein Verfahren nach einem der Ansprüche 1 bis 9 ausführt.

13. Konti-Glühe (2), die von einer Steuereinrichtung (10) nach Anspruch 12 gesteuert wird.
